# EUROPEAN PATENT SPECIFICATION

(11) **EP 3 211 358 B1**
(45) Date of publication and mention of the grant of the patent: **18.09.2019**
(21) Application number: 17150203.2
(22) Date of filing: 03.01.2017
(51) Int. Cl.: F28F 7/02, F28F 1/02, B22F 3/105, B29C 67/00, B33Y 10/00, F28D 7/00, F28F 1/04, B23P 15/26, B22F 5/00, B33Y 80/00, B29C 64/00

(54) **HEAT EXCHANGER CHANNELS**
WÄRMETAUSCHERKANÄLE
CANAUX D'ÉCHANGEUR DE CHALEUR

(30) Priority: 15.01.2016 US 201614997216
(43) Date of publication of application: 30.08.2017
(73) Proprietor: Hamilton Sundstrand Corporation, Charlotte, NC 28217 (US)
(72) Inventor: HERRING, Neal R., East Hampton, Connecticut 06424 (US); ST. ROCK, Brian, Andover, Connecticut 06232 (US); KUCZEK, Andrzej Ernest, Bristol, Connecticut 06010 (US)
(74) Representative: Dehns

(56) References cited:
- EP-A1- 2 859 940
- WO-A2-2009/083795
- DE-A1-102011 010 021
- FR-A- 779 690
- FR-A- 804 975
- FR-A- 855 705
- RU-C1- 2 171 439
- US-A- 4 546 827
- US-A1- 2013 206 374

## Description

### BACKGROUND OF THE INVENTION

### 1. Field of the Invention

The present disclosure relates to heat exchangers, and more particularly to channels for heat exchangers.

### 2. Description of Related Art

Heat exchangers are central to the functionality of numerous systems, such as in gas turbine engines and environmental systems. On gas turbine engines, for example, heat exchangers are used for a variety of oil and air cooling applications. Heat exchangers are central to the operation of environmental control systems, e.g. air cycles, as well as other cooling systems. All of these applications are under continual design pressure to increase heat transfer performance, reductions in pressure loss, and reductions in size and weight. Conventional heat exchanger designs are dominated by plate fin construction, with tube shell and plate-type heat exchangers having niche applications. Traditional plate fin construction imposes multiple design constraints that can inhibit performance and increase size and weight. Without such design constraints, traditional heat exchangers could suffer structural reliability issues. Eventually, conventional designs will be unable to meet ever increasing high temperature applications, and this can limit system integration. Documents WO 2009/083795 A2, EP 2 859 940 A1, US 4 546 827 and DE 10 2011010 021 A1 disclose heat exchangers in which some of the low channels have cross sections that vary along their respective flow axes.

Such conventional methods and systems have generally been considered satisfactory for their intended purpose. However, there is still a need in the art for improved heat exchangers. The present disclosure provides a solution for this need.

### SUMMARY OF THE INVENTION

A heat exchanger includes a heat exchanger body. A first set of flow channels is defined in the heat exchanger body extending axially with respect to a first flow axis, wherein the first set of the flow channels forms a first flow circuit. A second set of flow channels is defined in the heat exchanger body extending axially with respect to a second flow axis. The second set of the flow channels forms a second flow circuit that is in fluid isolation from the first flow circuit. Each flow channel is fluidly isolated from the other flow channels. At least some of the flow channels have cross-sections that vary along their respective flow axis.

In an embodiment, a heat exchanger includes a heat exchanger body having a first end and a second end opposed to the first end along a flow axis, e.g., the first and second flow axes described above can be aligned in a common direction. A plurality of flow channels is defined in the heat exchanger body extending axially with respect to the flow axis. A first set of the flow channels forms a first flow circuit. A second set of the flow channels forms a second flow circuit that is in fluid isolation from the first flow circuit. Each flow channel is fluidly isolated from the other flow channels. At least some of the flow channels have cross-sections that vary along the flow axis.

For a counter-flow configuration, each flow channel of the first flow circuit includes a respective inlet on the first end of the heat exchanger body and a respective outlet on the second end of the heat exchanger body, and each flow channel of the second flow circuit includes a respective inlet on the second end of the heat exchanger body and a respective outlet on the first end of the heat exchanger body. In a cross-flow configuration, the first and second flow axes can be angled relative to one another. Each flow channel can have a single respective inlet and a single respective outlet.

The flow channels of both the first and second flow circuits have cross-sections that vary along their respective flow axis. The flow channels of the first flow circuit have cross-sections of a first shape, and the flow channels of the second flow circuit have cross-sections of a second shape different from the first shape. For example, each flow channel of the first flow circuit can have a hexagonal cross-sectional shape, and each flow channel of the second flow circuit can have a circular cross-sectional shape. It is also contemplated that in certain embodiments not within the scope of the invention, all of the flow channels have cross-sections that are rectangular.

Each adjacent pair of the flow channels is separated from one another by a heat exchanger wall, wherein the heat exchanger wall changes in cross-section from the first end of the heat exchanger body to the second end of the heat exchanger body. It is also contemplated that in certain embodiments not within the scope of the invention, each adjacent pair of the flow channels is separated from one another by a heat exchanger wall, wherein the heat exchanger wall is constant in cross-section from the first end of the heat exchanger body to the second end of the heat exchanger body.

The flow channels of the first flow circuit can increase in cross-sectional area in a first direction along the flow axis, and the flow channels of the second flow circuit can decrease in cross-sectional area in the first direction.

The flow channels can be configured as a plate fin configuration with rectangular channels, wherein each of the flow channels includes a plurality of inlets and outlets with fins extending axially to separate the inlets from one another and the outlets from one another in each of the flow channels. The flow channels and fins can be additively manufactured as a unitary structure.

The first end of the heat exchanger body can have a different cross-section than the second end of the heat exchanger body, wherein the cross-sectional areas of the flow channels conform to the change in cross-section of the heat exchanger body from the first end to the second end. The first end of the heat exchanger can have a different aspect ratio than the second end of the heat exchanger body. It is also contemplated that in certain embodiments the first end of the heat exchanger has a different cross-sectional area than the second end of the heat exchanger body.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described by way of example only in detail herein below with reference to certain figures, wherein:
Fig. 1 is a schematic perspective view of an exemplary heat exchanger showing flow channels at one end of the heat exchanger, and showing one of the flow channels extending to the opposite end of the heat exchanger in broken lines;
Fig. 2 is a schematic perspective view of a heat exchanger constructed in accordance with the present disclosure, showing one exemplary embodiment for the flow channels, where two different flow channel shapes are for the two different flow circuits, and where the flow channels all change size along the flow direction;
Fig. 3 is a schematic perspective view of the heat exchanger of Fig. 1, showing another exemplary embodiment of flow channels not within the scope of the invention, where all the flow channels have rectangular cross-sections along their lengths;
Fig. 4 is a schematic perspective view of the heat exchanger of Fig. 1, showing another exemplary embodiment of flow channels not within the scope of the invention, wherein heat exchange fins are included in the flow channels;
Fig. 5 is a schematic perspective view of the heat exchanger of Fig. 1, showing another exemplary embodiment of flow channels not within the scope of the invention, wherein the first and second ends of the heat exchanger have different cross-sections, and wherein the flow channels conform to this change in cross-section; and
Fig. 6 is a schematic perspective view of another example of a heat exchanger, showing a cross-flow heat exchanger configuration.

### DETAILED DESCRIPTION OF THE PREFERRED EMBODIMENTS

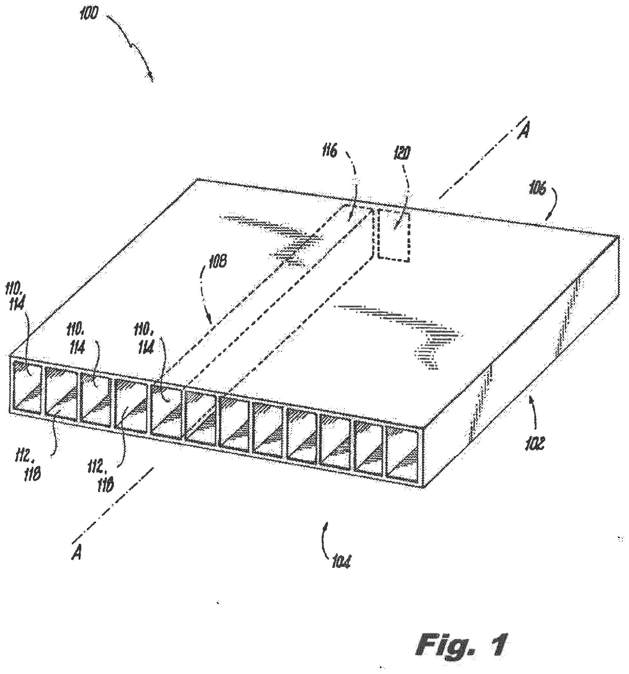

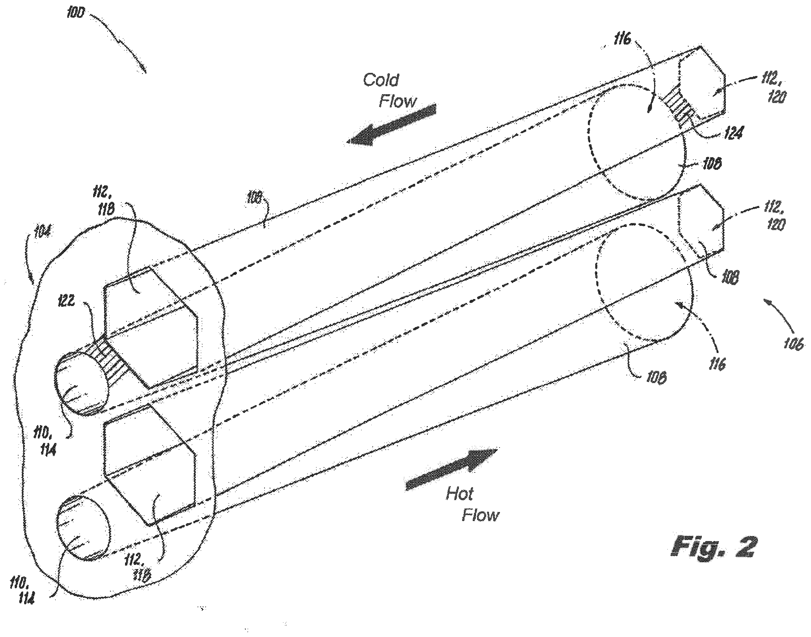

Reference will now be made to the drawings wherein like reference numerals identify similar structural features or aspects of the subject disclosure. For purposes of explanation and illustration, and not limitation, a partial view of an exemplary heat exchanger is shown in Fig. 1 and is designated generally by reference character 100. Other examples of heat exchangers are provided in Figs. 2-6, as will be described. The systems and methods described herein can be used to improve heat exchanger performance and provide increased design flexibility relative to traditional heat exchangers.

Heat exchanger 100 includes a heat exchanger body 102 having a first end 104 and a second end 106 opposed to the first end 104 along a flow axis A. A plurality of flow channels 108 is defined in the heat exchanger body 102 extending axially with respect to the flow axis A. For sake of clarity, only one flow channel is indicated in broken lines in Fig. 1. A first set of the flow channels 108 forms a first flow circuit 110. A second set of the flow channels 108 forms a second flow circuit 112 that is in fluid isolation from the first flow circuit. As shown in Fig. 1, every other flow channel 108 belongs to the first flow circuit 110, and the remaining flow channels 108 belong to the second flow circuit 112. For example, first flow circuit 110 can be the hot flow circuit, and the second flow circuit 112 can be the cold circuit, wherein the hot and cold circuits exchange heat with one another within heat exchanger 100.

Each flow channel 108 is fluidly isolated from the other flow channels 108 within heat exchanger body 102. Each flow channel 108 of the first flow circuit 110 includes a single respective inlet 114 on the first end 104 of the heat exchanger body 102 and a single respective outlet 116 on the second end 106 of the heat exchanger body 102 (for sake of clarity, an outlet 116 is shown for only one flow channel 108 of the first flow circuit 110 in Fig. 1). Each flow channel 108 of the second flow circuit 112 includes a single respective inlet 120 on the second end 106 of the heat exchanger body 102 and a single respective outlet 118 on the first end 104 of the heat exchanger body 102 (for sake of clarity, an inlet 120 for only one of the flow channels 108 of the second flow circuit 112 is shown in Fig. 1). This provides a counter-flow heat exchanger configuration. In Fig. 1, the flow channels 108 are indicated schematically, however as described further herein with reference to Figs. 2-5, the flow channels 108 of both the first and second flow circuits 110 and 112 have cross-sections that vary along the flow axis A.

With reference to Fig. 2, the flow channels 108 of the first flow circuit 110 have cross-sections of a first shape, i.e., circular. The flow channels 108 of the second flow circuit 112 have cross-sections of a second shape different from the first shape, i.e., hexagonal. Each adjacent pair of the flow channels 108 is separated from one another by a heat exchanger wall, wherein the heat exchanger wall changes in cross-section from the first end of the heat exchanger body to the second end of the heat exchanger body. This is shown in Fig. 2, where the first cross-hatched portion 122 is a portion of the heat exchanger wall at the first end 104, and the corresponding portion 124 of the wall at the second end 106 has a different shape due to the difference in the shapes of the flow channels 108 in the flow direction (e.g., the direction of axis A in Fig. 1). The flow channels 108 of the first flow circuit 110 increase in cross-sectional area in a first direction along the flow axis, indicated by the hot flow arrow in Fig. 2. The flow channels 108 of the second flow circuit 112 decrease in cross-sectional area in the first direction, but since this is a counter-flow configuration the flow channels 108 of the second flow circuit increase in cross-sectional area in a second direction, indicated by the cold flow arrow in Fig. 2, that is opposite the first flow direction. Thus the flow channels 108 of both flow circuits increase in cross-sectional area in their respective flow direction.

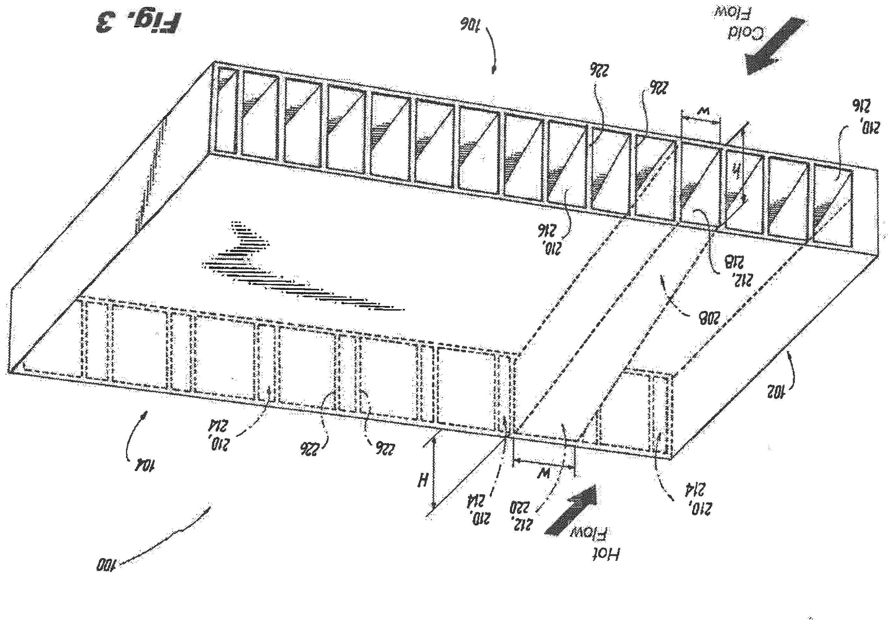

With reference now to Fig. 3, heat exchanger 100 is shown with another example of flow channels 208, wherein all of the flow channels 208 have cross-sections that are rectangular. Inlets 214 of the first flow circuit 210, e.g., a hot flow circuit, are each connected to respective outlets 216, and inlets 220 of the second flow circuit 212, e.g., a cold flow circuit, are each connected to respective outlets 218. For sake of clarity, only the inlets and outlets are shown in Fig. 3, but one of the flow channels 208 is indicated with broken lines. There are heat exchanger walls 226 that separate adjacent pairs of the flow channels 208. Walls 226 are constant in cross-section from the first end 104 of the heat exchanger body 102 to the second end 106. The flow direction of the first flow circuit 210 is indicated by the hot flow arrow, and the counter-flowing direction of the second flow circuit 212 is indicated by the cold flow arrow. As described above with respect to Fig. 2, each flow channel 208 increases in cross-sectional area along its respective flow direction, so all of the flow channels 208 are diverging. The height H or h of the flow channels 208 does not change over their axial length, so the change in area is a result of changing width W or w. For example, for the flow channel 208 indicated by dashed lines in Fig. 3, the height to width ratio h/w at the inlet 216 transitions to H/W at outlet 220. So while the rectangular cross-sectional shape is maintained, the aspect ratio of the rectangle changes along the axial length of the flow channels 208.

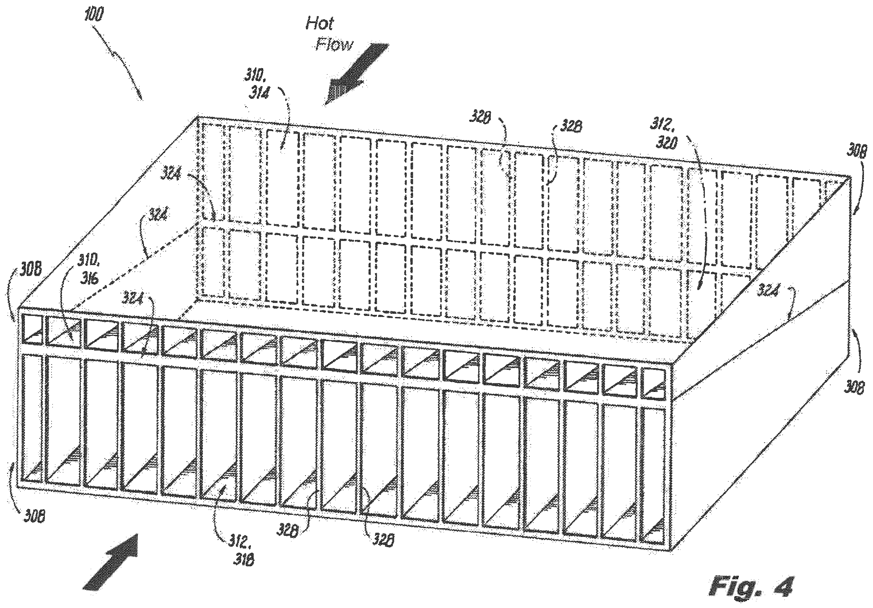

With reference now to Fig. 4, another example of flow channels 308 for heat exchanger 100 is shown. The flow channels 308 are configured as a plate fin configuration with rectangular channels. Only one flow channel is shown in Fig. 4 for the first flow circuit 310, and one flow channel is shown in Fig. 4 for second flow circuit 312. Each of the flow channels 308 includes a plurality of inlets 314/318 and a plurality of respective outlets 316/320. Fins 328 extend axially along the flow directions, indicated by hot and cold flow arrows in Fig. 4, to separate the inlets 314/318 from one another and the outlets 316/320 from one another in each of the flow channels 308. A change in area similar to that described above with respect to Fig. 3 is provided by heat exchanger wall 334, which separates first flow circuit 310 from second flow circuit 312. Heat exchange wall 324 is oblique with respect to the flow directions, so both flow circuits 310 and 312 diverge along their respective flow directions. The flow channels 308, fins 326, wall 324, and heat exchanger body 102 can be additively manufactured as a unitary structure, for example.

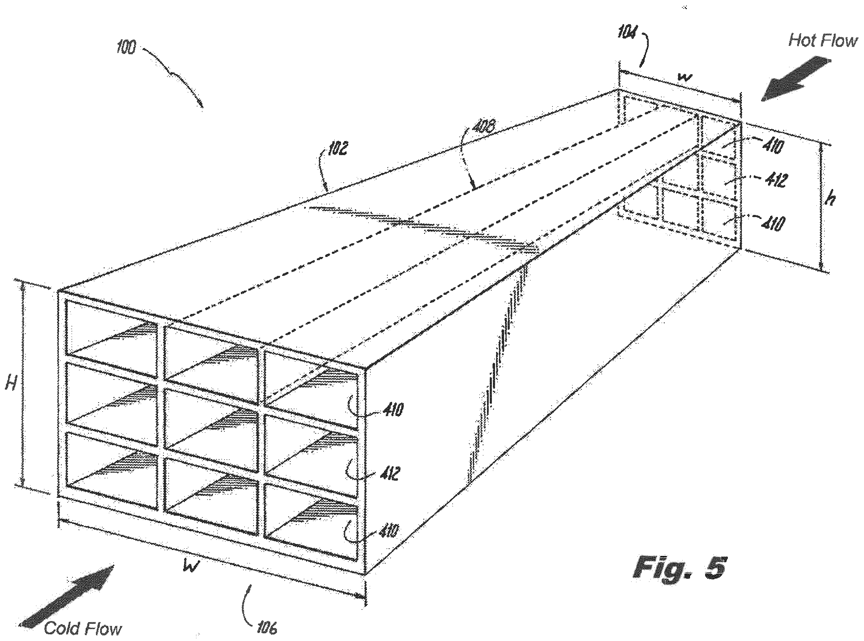

With reference now to Fig. 5, heat exchanger 100 is shown with another exemplary channel configuration, in which first end 104 of the heat exchanger body 102 has a different cross-section than the second end 206. The cross-sectional areas of the flow channels 408 are tapered to conform to the change in cross-section of the heat exchanger body 102 from the first end 104 to the second end 106 (only one flow channel 408 is indicated with broken lines in Fig. 4 for sake of clarity). Heat exchanger body 102 changes cross-sectional area along the flow direction between first and second ends 104 and 106, i.e., second end 106 is larger than first end 104 in cross-sectional area. Additionally, heat exchanger body 102 undergoes a change in cross-sectional aspect ratio along the flow directions. The first end 104 of the heat exchanger has a different aspect ratio, h/w, than the second end 106, which has an aspect ratio of H/W. It is contemplated that the thickness of the walls 524 separating the respective flow passages 408 can be constant in thickness. Flow passages 408 of first flow circuit 410 alternate with the flow passages 408 of second flow circuit 412, and it should be noted that the flow area of the first flow circuit 410 diverges along its flow direction (indicated by the hot flow arrow in Fig. 5), while the second flow circuit converges along its flow direction (indicated by the cold flow arrow in Fig. 5).

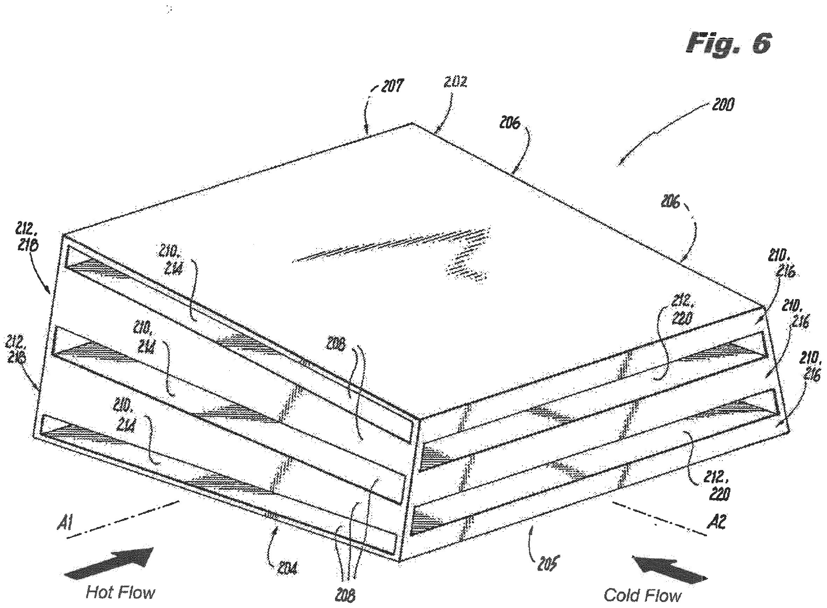

With reference now to Fig. 6, an example of a cross-flow heat exchanger configuration is shown, in which the first and second flow circuits each have a separate flow axis, and wherein the flow axes are angled relative to one another instead of having both flow circuits with flow axes aligned as described above. Heat exchanger 200 includes a heat exchanger body 202. A plurality of flow channels 208 is defined in the heat exchanger body 202, wherein a first set of the flow channels 208 forms a first flow circuit 210. A second set of the flow channels 208 forms a second flow circuit 212 that is in fluid isolation from the first flow circuit. As shown in Fig. 6, every other flow channel 208 belongs to the first flow circuit 210, and the remaining flow channels 208 belong to the second flow circuit 212. For example, first flow circuit 210 can be the hot flow circuit, and the second flow circuit 212 can be the cold circuit, wherein the hot and cold circuits exchange heat with one another within heat exchanger 200. Flow into the first flow circuit is indicated schematically in Fig. 6 by the large hot flow arrows, and flow into the second flow circuit is indicated schematically in Fig. 6 by the large cold flow arrow.

Each flow channel 208 of the first flow circuit 210 includes a single respective inlet 214 on the first end 204 of the heat exchanger body 102 and a single respective outlet 216 on a second end 206 of the heat exchanger body 202. Each flow channel 208 of the second flow circuit 212 includes a single respective inlet 220 on a third end 205 of the heat exchanger body 202 and a single respective outlet 218 on a fourth end 207 of the heat exchanger body 202. This provides a cross-flow heat exchanger configuration, since the flow axis A1 of the first flow circuit 210 is angled, e.g., perpendicular, to the flow axis A2 of the second flow circuit 212. As shown in Fig. 6, the flow channels 208 of second flow circuit 212 have cross-sections that increase along their respective flow axis A2. Those skilled in the art will readily appreciate that the flow channels of either or both of the flow circuits 210 and 212 can change along their respective flow axis, converging, diverging, or otherwise changing shape as needed on an application by application basis without departing from the scope of this disclosure.

The capabilities of additive manufacturing enable geometric features that are not feasible with conventional techniques, such as the configurations described above. Conventional manufacturing is generally restricted to channels of constant cross sectional area. It can be beneficial to design heat exchangers with channels that either increase or decrease in cross sectional area. This allows the diffusion of the flow when the channels increase in area, which can allow reduced pressure loss. Additive manufacturing enables the channel sizes to increase or decrease in cross sectional area in the direction of the fluid flow. On the cold side of the heat exchanger this can serve to reduce the pressure drop, if the channels are allowed to increase in area. While additive manufacturing may be advantageous in certain applications, those skilled in the art will readily appreciate that any other suitable manufacturing techniques can be used without departing from the scope of this disclosure.

The increased area could offset the pressure loss due to the flow acceleration as the cold fluid is heated. The concept can also be applied to rectangular channel configurations as described herein. The concept can even be applied to plate fin type configurations where the layers change height in the flow direction to modify the cross sectional area. Those skilled in the art will readily appreciate that other channel geometries may also benefit from this concept without departing from the scope of this disclosure.

Potential benefits of the configurations disclosed herein include they can reduce heat exchanger size and improve performance through two principles. First, in a counter-flow configuration, improved performance is possible by enabling better balancing of the hot and cold side heat transfer and pressure drop, and also increase are possible in the heat exchanger effectiveness for a given overall heat transfer area (UA). Secondly, configurations disclosed herein can significantly increase the primary surface area in the heat exchanger which reduces the effects of fin efficiency, relative to traditional configurations.

Additional advantages can include structural benefits that enable high temperature and high pressure operation. For example, optimization of high pressure channel shape (e.g., circular instead of rectangular) can be applied such that the stress from the pressure differential is minimized. An overall counter-flow configuration as disclosed herein can reduce the temperature differential across the heat exchanger planform if the cold side outlet is aligned with the hot side inlet, and vice versa. Configurations as disclosed herein can add heat transfer area and structural support to the inlet and outlet headers compared to traditional configurations. These features can be used to address transient thermal stress issues since the temperature response of the header and the core can be matched more closely than in a traditional open header. Those skilled in the art will readily appreciate that non-counter-flow configurations can also be used without departing from the scope of this disclosure.

The methods and systems of the present disclosure, as described above and shown in the drawings, provide for heat exchangers with superior properties including greater design flexibility and improved performance relative to traditional heat exchangers. While the apparatus and methods of the subject disclosure have been shown and described with reference to preferred embodiments, those skilled in the art will readily appreciate that changes and/or modifications may be made thereto without departing from the scope of the claims.

## Claims

1. A heat exchanger (100) comprising:
a heat exchanger body (102);
a first set of flow channels (108) defined in the heat exchanger body (102) extending axially with respect to a first flow axis, wherein the first set of the flow channels (108) forms a first flow circuit (110);
a second set of flow channels (108) defined in the heat exchanger body (102) extending axially with respect to a second flow axis, wherein the second set of the flow channels forms a second flow circuit (112) that is in fluid isolation from the first flow circuit (110),
wherein each flow channel is fluidly isolated from the other flow channels;
wherein at least some of the flow channels (108) have cross-sections that vary along their respective flow axis;
wherein the heat exchanger body (102) includes a first end (104) and a second end (106) opposed to the first end (104) along the first flow axis, wherein the first flow axis and the second flow axis are aligned in a common direction,
wherein each flow channel (108) of the first flow circuit (110) includes a respective inlet (114) on the first end (104) of the heat exchanger body (102) and a respective outlet (116) on the second end of the heat exchanger body, and wherein each flow channel (108) of the second flow circuit (112) includes a respective inlet (120) on the second end (106) of the heat exchanger body (102) and a respective outlet (118) on the first end (104) of the heat exchanger body (102);
wherein each adjacent pair of the flow channels (108) is separated from one another by a heat exchanger wall, **characterized in that** the heat exchanger wall changes in cross-section from the first end (104) of the heat exchanger body (102) to the second end (106) of the heat exchanger body (102); and
**in that** the flow channels (108) of the first flow circuit (110) have cross-sections of a first shape, and the flow channels (108) of the second flow circuit (112) have cross-sections of a second shape different from the first shape.

2. The heat exchanger as recited in claim 1, wherein the flow channels (108) of the first flow circuit (110) increase in cross-sectional area in a first direction along the first flow axis, and wherein the flow channels (108) of the second flow circuit (112) decrease in cross-sectional area in the first direction.

3. The heat exchanger as recited in claim 1, wherein the first end (104) of the heat exchanger body (102) has a different cross-section than the second end (106) of the heat exchanger body (102) and wherein the cross-sectional areas of the flow channels conform to the change in cross-section of the heat exchanger body (102) from the first end (104) to the second end (106).

4. The heat exchanger as recited in claim 3, wherein the first end (104) of the heat exchanger has a different aspect ratio than the second end (106) of the heat exchanger body (102); and/or wherein the first end (104) of the heat exchanger has a different cross-sectional area than the second end (106) of the heat exchanger body.

5. The heat exchanger as recited in claim 1, wherein each flow channel (108) includes a single respective inlet and a single respective outlet.

6. The heat exchanger as recited in claim 1, wherein the flow channels (108) of both the first (110) and second (112) flow circuits have cross-sections that vary along the flow axis.

7. The heat exchangers as recited in claim 1, wherein each flow channel (108) of the first flow circuit (110) has a hexagonal cross-sectional shape, and wherein each flow channel of the second flow circuit (112) have a circular cross-sectional shape.

## Patentansprüche

1. Wärmetauscher (100), umfassend:
einen Wärmetauscherkörper (102);
einen ersten Satz an Strömungskanälen (108), der in dem Wärmetauscherkörper (102) definiert ist und sich axial in Bezug auf eine erste Strömungsachse erstreckt, wobei der erste Satz der Strömungskanäle (108) einen ersten Strömungskreislauf (110) bildet;
einen zweiten Satz an Strömungskanälen (108), der in dem Wärmetauscherkörper (102) definiert ist und sich axial in Bezug auf eine zweite Strömungsachse erstreckt, wobei der zweite Satz der Strömungskanäle einen zweiten Strömungskreislauf (112) bildet, der in Fluidisolation von dem ersten Strömungskreislauf (110) ist,
wobei jeder Strömungskanal von den anderen Strömungskanälen fluidisch isoliert ist;
wobei zumindest einige der Strömungskanäle (108) Querschnitte aufweisen, die entlang ihrer jeweiligen Strömungsachse variieren;
wobei der Wärmetauscherkörper (102) ein erstes Ende (104) und ein zweites Ende (106) gegenüber dem ersten Ende (104) entlang der ersten Strömungsachse beinhaltet, wobei die erste Strömungsachse und die zweite Strömungsachse in einer gemeinsamen Richtung ausgerichtet sind,
wobei jeder Strömungskanal (108) des ersten Strömungskreislaufs (110) einen jeweiligen Einlass (114) an dem ersten Ende (104) des Wärmetauscherkörpers (102) und einen jeweiligen Auslass (116) an dem zweiten Ende des Wärmetauscherkörpers beinhaltet und wobei jeder Strömungskanal (108) des zweiten Strömungskreislaufs (112) einen jeweiligen Einlass (120) an dem zweiten Ende (106) des Wärmetauscherkörpers (102) und einen jeweiligen Auslass (118) an dem ersten Ende (104) des Wärmetauscherkörpers (102) beinhaltet;
wobei jedes benachbarte Paar der Strömungskanäle (108) durch eine Wärmetauscherwand voneinander getrennt ist, **dadurch gekennzeichnet, dass** sich der Querschnitt der Wärmetauscherwand von dem ersten Ende (104) des Wärmetauscherkörpers (102) zu dem zweiten Ende (106) des Wärmetauscherkörpers (102) ändert; und
dass die Strömungskanäle (108) des ersten Strömungskreislaufs (110) Querschnitte einer ersten Form aufweisen und die Strömungskanäle (108) des zweiten Strömungskreislaufs (112) Querschnitte einer zweiten Form aufweisen, die sich von der ersten Form unterscheidet.

2. Wärmetauscher nach Anspruch 1, wobei der Querschnittsbereich der Strömungskanäle (108) des ersten Strömungskreislaufs (110) in einer ersten Richtung entlang der ersten Strömungsachse zunimmt und wobei der Querschnittsbereich der Strömungskanäle (108) des zweiten Strömungskreislaufs (112) in der ersten Richtung abnimmt.

3. Wärmetauscher nach Anspruch 1, wobei das erste Ende (104) des Wärmetauscherkörpers (102) einen anderen Querschnitt als das zweite Ende (106) des Wärmetauscherkörpers (102) aufweist und wobei die Querschnittsbereiche der Strömungskanäle der Querschnittsänderung des Wärmetauscherkörpers (102) von dem ersten Ende (104) zu dem zweiten Ende (106) entsprechen.

4. Wärmetauscher nach Anspruch 3, wobei das erste Ende (104) des Wärmetauschers ein anderes Seitenverhältnis als das zweite Ende (106) des Wärmetauscherkörpers (102) aufweist; und/oder wobei das erste Ende (104) des Wärmetauschers einen anderen Querschnittsbereich als das zweite Ende (106) des Wärmetauscherkörpers aufweist.

5. Wärmetauscher nach Anspruch 1, wobei jeder Strömungskanal (108) einen einzelnen jeweiligen Einlass und einen einzelnen jeweiligen Auslass beinhaltet.

6. Wärmetauscher nach Anspruch 1, wobei die Strömungskanäle (108) sowohl von dem ersten (110) als auch von dem zweiten (112) Strömungskreislauf Querschnitte aufweisen, die entlang der Strömungsachse variieren.

7. Wärmetauscher nach Anspruch 1, wobei jeder Strömungskanal (108) des ersten Strömungskreislaufs (110) eine hexagonale Querschnittsform aufweist und wobei jeder Strömungskanal des zweiten Strömungskreislaufs (112) eine kreisförmige Querschnittsform aufweist.

## Revendications

1. Échangeur(100) de chaleur comprenant :
un corps d'échangeur de chaleur (102) ;
un premier ensemble de canaux d'écoulement (108) défini dans le corps d'échangeur de chaleur (102) s'étendant axialement par rapport à un premier axe d'écoulement, dans lequel le premier ensemble de canaux d'écoulement (108) forme un premier circuit d'écoulement (110) ;
un second ensemble de canaux d'écoulement (108) défini dans le corps d'échangeur de chaleur (102) s'étendant axialement par rapport à un second axe d'écoulement, dans lequel le second ensemble de canaux d'écoulement forme un second circuit d'écoulement (112) qui est en isolation fluidique depuis le premier circuit d'écoulement (110),
dans lequel chaque canal d'écoulement est isolé de manière fluidique des autres canaux d'écoulement ;
dans lequel au moins une partie des canaux d'écoulement (108) ont des sections transversales qui varient le long de leur axe d'écoulement respectif ;
dans lequel le corps d'échangeur de chaleur (102) comporte une première extrémité (104) et une seconde extrémité (106) opposée à la première extrémité (104) le long du premier axe d'écoulement, dans lequel le premier axe d'écoulement et le second axe d'écoulement sont alignés dans une direction commune,
dans lequel chaque canal d'écoulement (108) du premier circuit d'écoulement (110) comporte une entrée respective (114) sur la première extrémité (104) du corps d'échangeur de chaleur (102) et une sortie respective (116) sur la seconde extrémité du corps d'échangeur de chaleur, et dans lequel chaque canal d'écoulement (108) du second circuit d'écoulement (112) comporte une entrée respective (120) sur la seconde extrémité (106) du corps d'échangeur de chaleur (102) et une sortie respective (118) sur la première extrémité (104) du corps d'échangeur de chaleur (102) ;
dans lequel chaque paire adjacente des canaux d'écoulement (108) est séparée l'une de l'autre par une paroi d'échangeur de chaleur, **caractérisé en ce que** la paroi d'échangeur de chaleur change dans une section transversale depuis la première extrémité (104) du corps d'échangeur de chaleur (102) vers la seconde extrémité (106) du corps d'échangeur de chaleur (102),
et
**en ce que** les canaux d'écoulement (108) du premier circuit d'écoulement (110) ont des sections transversales d'une première forme, et
les canaux d'écoulement (108) du second circuit d'écoulement (112) ont des sections transversales d'une seconde forme différente de la première forme.

2. Échangeur de chaleur selon la revendication 1, dans lequel les canaux d'écoulement (108) du premier circuit d'écoulement (110) augmentent dans une zone de section transversale dans une première direction le long du premier axe d'écoulement, et dans lequel les canaux d'écoulement (108) du second circuit d'écoulement (112) diminuent en section transversale dans la première direction.

3. Échangeur de chaleur selon la revendication 1, dans lequel la première extrémité (104) du corps d'échangeur de chaleur (102) a une section transversale différente de celle de la seconde extrémité (106) du corps d'échangeur de chaleur (102) et dans lequel les zones de section transversale des canaux d'écoulement se conforment au changement de section transversale du corps d'échangeur de chaleur (102) de la première extrémité (104) à la seconde extrémité (106).

4. Échangeur de chaleur selon la revendication 3, dans lequel la première extrémité (104) de l'échangeur de chaleur a un rapport d'aspect différent de celui de la seconde extrémité (106) du corps d'échangeur de chaleur (102) ; et/ou dans lequel la première extrémité (104) de l'échangeur de chaleur a une zone de section transversale différente de celle de la seconde extrémité (106) du corps d'échangeur de chaleur.

5. Échangeur de chaleur selon la revendication 1, dans lequel chaque canal d'écoulement (108) comporte une seule entrée respective et une seule sortie respective.

6. Échangeur de chaleur selon la revendication 1, dans lequel les canaux d'écoulement (108) de chacun des premier (110) et second (112) circuits d'écoulement ont des sections transversales qui varient le long de l'axe d'écoulement.

7. Échangeurs de chaleur selon la revendication 1, dans lesquels chaque canal d'écoulement (108) du premier circuit d'écoulement (110) a une forme de section transversale hexagonale, et dans lesquels chaque canal d'écoulement du second circuit d'écoulement (112) a une forme de section transversale circulaire.
